Europäisches Patentamt

European Patent Office

Office européen des brevets

(11) Numéro de publication: **0 007 856**
**B1**

(12) **FASCICULE DE BREVET EUROPEEN**

(45) Date de publication du fascicule du brevet: **27.12.84**

(21) Numéro de dépôt: **79400501.7**

(22) Date de dépôt: **13.07.79**

(51) Int. Cl.³: **C 22 B 7/02,** C 22 B 19/30,
C 22 B 13/02

(54) Procédé pour récupérer les métaux contenus dans des composés plombifères et zincifères.

(30) Priorité: **13.07.78 FR 7820933**

(43) Date de publication de la demande:
**06.02.80 Bulletin 80/03**

(45) Mention de la délivrance du brevet:
**27.12.84 Bulletin 84/52**

(84) Etats contractants désignés:
**AT BE CH DE FR GB IT LU NL SE**

(56) Documents cités:
**DE-B-1 263 798**
**FR-A-1 337 871**
**FR-A-1 403 392**
**FR-A-1 406 062**
**FR-A-1 544 303**
**FR-A-2 274 698**
**FR-A-2 317 363**
**GB-A- 922 056**

(73) Titulaire: **SOCIETE MINIERE ET
METALLURGIQUE DE PENARROYA Société
anonyme dite:
Tour Maine-Montparnasse 33, avenue du Maine
F-75755 Paris Cédex 15 (FR)**

(72) Inventeur: **Madelin, Bertrand
47, Boulevard Montparnasse
F-75006 Paris (FR)**

(74) Mandataire: **Ricalens, François
Chef du Service de la Propriété Industrielle du
Groupe IMETAL 1, avenue Albert Einstein
F-78191 Trappes Cedex (FR)**

Courier Press, Leamington Spa, England.

# 0 007 856

## Description

La présente invention concerne un procédé pour récupérer les métaux qui sont contenus dans les composés oxydés plombifères et zincifères et plus particulèrement ceux qui sont contenus dans les poussières de haut-fourneaux et d'aciéries. Ce procédé permet notamment la récupération du fer, du plomb et du zinc.

L'épuration des gaz provenant de haut-fourneaux et d'aciéries permet la récupération de poussières dont la teneur en fer et en métaux non-ferreux, tels que le zinc et le plomb, sont très variables. Généralement, ces poussières ne peuvent pas être réutilisées dans un cycle de fabrication de fonte à cause de leur teneur trop élevée en zinc, en plomb et en métaux alcalins. De même, dans le plupart des cas, elles ne peuvent être recyclées de façon économique dans un procédé d'élaboration du zinc ou du plomb du fait de leur teneur trop faible en ces métaux.

Actuellement, différents procédés pyrométallurgiques existent pour traiter ces poussières issues de hautfourneaux et d'aciéries. Ainsi, selon le procédé Waelz, on introduit dans un four tournant horizontal des poussières d'aciéries qui ont été, au préalable, agglomérés avec un combustible carboné: on obtient, d'une part, un résidu enrichi en oxydes de fer qui peut être introduit dans un hautfourneau et, d'autre part, des oxydes de plomb et de zinc.

La demande de brevet français FR—A—2.352.064 décrit un procédé permettant la récupération du plomb et du zinc sous forme oxydée: elle utilise pour cela un four électrothermique dans lequel les poussières riches en zinc sont introduites après avoir été, au préalable, agglomérées avec des déchets pétroliers. Ce procédé ne permet pas la récupération satisfaisante du fer.

Selon d'autres procédés, on réalise un bouletage de poussières à faible teneur en zinc et plomb et on introduit ce produit dans un four électrique. On peut ainsi récupérer, d'une part, du fer associé à du cobalt, du nickel et du chrome et, d'autre part, des oxydes de plomb et de zinc en les extrayant des fumées.

On constate que selon ces divers procédés il est nécessaire d'agglomérer les poussières issues de haut-fourneaux et d'aciéries avec du carbone avant de les introduire dans un four. De plus, ces procédés ne permettent pas tous de récupérer le fer et conduisent à l'obtention d'oxydes de plomb et de zinc. Si on veut obtenir ces métaux sous la forme métallique, un traitement ultérieur, généralement une électrolyse, est nécessaire.

Aussi un but de la présente invention est de fournir un procédé pour récupérer directement sous forme métallique le zinc et le plomb contenus dans les poussières issues de haut-fourneaux et d'aciéries.

Un autre but de l'invention est de fournir un procédé pour récupérer directement sous forme de fonte le fer contenu dans de telles poussières.

Un but supplémentaire est de fournir un procédé de ce type qui ne nécessite pas en général un bouletage préalable des ces poussières et qui ne comprend aucune étape de calcination.

Un but supplémentaire est de fournir un procédé de ce type qui ne nécessite pas l'utilisation d'une matière carbonée fortement élaborée, telle que le coke.

Ces buts, ainsi qui d'autres qui apparaîtront par la suite, sont atteints par un procédé de récupération du plomb et zu dinc contenus dans des produits oxydés plombifères et zincifères caractérisés par le fait que l'on injecte dans un bain de fonte lesdits produits après séchage ainsi qu'une quantité de carbone soluble égale à la somme, d'une part des quantités stoechiométriques nécessaires pour réduire l'oxyde de zinc et les oxydes de métaux moins réducteurs que le zinc à la température du bain de fonte et, d'autre part, de la quantité nécessaire pour transformer en fonte 40 à 80% des oxydes de fer par le fait que lesdits produits sont, après un éventuel broyage, à une maille comprise entre 0 et 4 millimètres, par le fait que l'on injecte lesdits produits dans ledit bain de fonte en utilisant un gaz porteur non-oxydant vis-à-vis de la vapeur de zinc et par le fait que l'on condense les vapeurs qui se dégagent du bain de fonte.

Les composés oxydés plombifères et/ou zincifères, sont issus par exemple de haut-fourneaux et d'aciéries, puis on les injecte dans un bain de fonte et en atmosphère nonoxydante, et on condense les vapeurs qui se dégagent, le plomb et le zinc étant récupérés sous forme métallique.

La granulométrie de ces composés plombifères et/ou zincifères est telle que la dimension des particules constitutives soit comprise entre 0 et 4 mm et de préférence entre 0 et 1 millimètre. Lorsque ces composés oxydés sont des poussières d'aciéries, il n'est en général pas nécessaire de les broyer. Dans les autres cas, lorsque le cas le nécessite, on modifie la granulométroe du composé oxydé de manière que le $d_{80}$, c'est-à-dire la dimension de la maille la plus petite laissant passer 80% en poids du produit, soit inférieur à 4 millimètres et de préférence à 1 millimètre. Dans la suite de la description, les composés oxydés plombifères et/ou zincifères après un éventuel broyage seront désignés sous le vocable de poudres.

Avantgeusement, la température du bain de fonte est comprise entre 1 100 et 1 600°C; elle est de préférence comprise entre 1 250 et 1 500°C.

Selon un mode de réalisation préféré, on réalise ce procédé à l'intérieur d'un four électrique étanche.

Avantageusement, le bain de fonte est saturé en carbone. Les poudres sout, préalablement à

2

**0 007 856**

l'injection, mélangées avec du carbone, sans qu'il soit nécessaire de procéder à une agglomération.

De préférence, on condense les vapeurs qui se dégagent au-dessus de ce bain de fonte, à une température inférieure à 900°C, cette température pouvant être même inférieure à 400°C.

On fait passer les gaz issus de l'étape de condensation dans un cyclone dépoussiéreur puis dans un laveur.

Pour sécher les poudres avant de les mélanger avec du carbone, on peut avantageusement utiliser l'énergie provenant de la combustion des gaz issus du laveur.

Il peut être intéressant de laver les poudres avant de les sécher.

De préférence, on injecte dans le four les poudres au moyen d'un gaz choisi dans le groupe constitué par l'azote, l'argon et les gaz issus des installations situées après l'étape de condensation.

Quant à l'installation pour la mise en oeuvre de ce procédé, elle comprend un four électrique étanche muni de moyens pour injecter ces poudres et un condenseur qui communiquent dans leur partie haute.

Avantageusement, le four électrique est un four électrique à électrodes submergées.

Les moyens pour injecter les poudres sont choisis dans le groupe constitué par les cannes d'injection, les tuyères d'injection et les électrodes creuses.

Le four peut aussi comporter un sas pour introduire une partie de ces poudres.

Cette installation peut également comprendre un mélangeur dans lequel les poudres sont mélangées avec du carbone avant leur injection dans le four électrique.

En amont de ce mélangeur, cette installation peut comporter un dispositif pour sécher ces poudres, lequel peut être situé après un laveur. Un filtre décanteur est disposé entre le laveur et le dispositif de séchage.

Avantageusement, cette installation comprend un ensemble d'épuration de gaz disposé après le condenseur.

Cette installation peur comprendre également des soupapes de sécurité qui se déclenchent quand la pression des gaz dans celle-ci devient supérieure à une valeur déterminée.

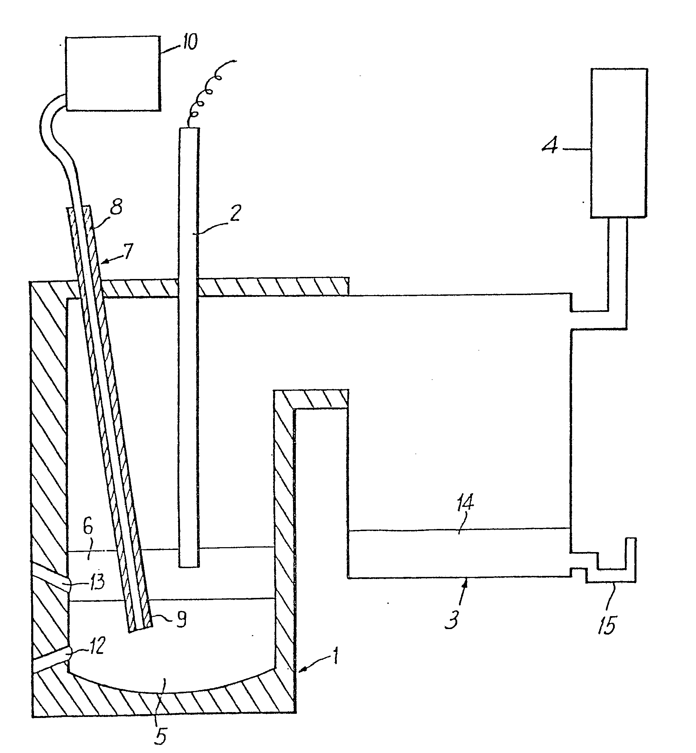

La description qui va suivre, et qui ne présente aucun caractère limitatif, doit être lue en regard de la figure annexée qui représente une coupe schématique d'une installation permettant la mise en oeuvre du procédé selon l'invention.

Ainsi qu'on peut le voir sur cette figure, une telle installation comprend un four électrique étanche 1 muni d'une électrode 2, et un condenseur 3 qui est raccordé, d'une part, au four électrique 1 et, d'autre part, à un dispositif d'épuration des gaz 4.

Le four électrique 1, qui est selon ce mode de réalisation on four électrique à électrode submergée, renferme un bain de fonte liquide 5 surmonté d'un laitier 6. Dans cet exemple, on utilise une canne d'injection 7, la partie supérieure 8 de celle-ci est relié à un dispositif d'insufflation 10 des poudres.

Selon le procédé de la présente invention, on injecte, au moyen de cette canne d'injection 7, dans le bain de fonte liquide 5, les poudres qui ont été au préalable mélangées avec du carbone. Ces poudres sont injectées sous la surface de la fonte liquide 5, même si l'orifice de la canne d'injection 7 est située à l'interface fonte-laitier. La quantité de carbone à introduire correspond sensiblement à la somme, d'un part, des quantités stoechiométriques nécessaires pour réduire l'oxyde de zinc et les oxydes de métaux moins réducteurs que le zinc à la température du bain de fonte tels que le plomb, le cuivre, le nickel, le sodium, et le potassium et, d'autre part, de la quantité nécessaire pour réduire la fraction désirée de fer et de manganèse.

D'une manière générale, notamment pour des questions d'économie en matières carbonées, on introduit du carbone en quantité suffisante pour transformer en fonte 40 à 80% des oxydes de fer.

Toutefois, ce procédé donne encore des résultats acceptables lorsque le four est conduit de façon à réduire à des proportions plus importantes de fer ainsi que du chrome et du manganèse. Ceci nécessite toutefois une quantité plus grande de carbone et donc rend le procédé plus coûteux.

La conduite du four et l'introduction du carbone sont telles que la teneur en silicium dans le bain métallique reste inférieure à 5% et de préférence à 2% en poids.

Le carbone peut être introduit sous toutes les formes possibles, à condition toutefois qu'il soit soluble dans le fer ou ses alliages pour former de la fonte. C'est pourquoi le taux de matières volatiles de doit pas être trop élevé, c'est-à-dire rester inférieure à 35% en poids puisque le carbone de ces dernières n'est en général pas soluble dans le fer ou dans les ferro-alliages pour donner de la fonte. On peut notamment utiliser des mélanges charbon-coke à plus de 50% de charbon, des charbons de diverses compositions ainsi que des produits de faible valeur marchande, en raison de leur granulométrie comme par exemple les fines de charbon.

Le spécialiste en la matière remarquera combien un procédé ne nécessitant pas un produit aussi élaboré que le coke est intéressant du point de vue économique.

On utilise pour cette injection un gas porteur qui doit être non-oxydant de façon à éviter une réoxydation ultérieure du zinc gazeux: de ce fait on peut, par exemple, choisir soit un gaz neutre tel que l'azote ou l'argon, soit un gaz réducteur comme le monoxyde de carbone.

L'injection des poudres peut également être réalisée au moyen d'une électrode creuse: dans ce cas les poudres sont injectées dans le laitier 6 à la surface du bain de fonte liquide 5. On peut aussi

3

utiliser au moins une tuyère latérale ou inférieure débouchant dans la fonte liquide 5. Si l'on envisage d'introduire une partie des poudres sous forme compacte (boulettes ou briquettes par exemple), le four électrique 1 doit comporter un sas. Ce mode d'introduction peur être utilisé notamment pour introduire une partie des poudres le long des parois du four électrique 1 afin d'obtenir un auto-garnissage protecteur. Ces différents modes sont complémentaires.

Avant de mélanger ces poudres avec du carbone, il est évident qu'elles sont du être séchées. Eventuellement, il peut être intéressant de les laver avant de les sécher. On interpose entre le laveur et le dispositif de séchage un filtre décanteur.

Les poudres injectées se répartissent dans le bain de fonte liquide 5: le carbone dissous dans la fonte et celui mélangé aux poudres réduisent les différents oxydes notamment de plomb, zinc et, lorsqu'ils sont présents, les éléments moins réducteurs que le zinc tels que, par exemple, fer, cuivre, nickel, sodium, manganèse et potassium.

Afin d'obtenir une bonne cinétique de réaction et une réduction totale du plomb et du zinc, la température de la fonte liquide 5 doit être comprise entre 1 100 et 1 600°C, l'intervalle préféré étant 1 250—1 500°C.

Dans ce domaine de températures, certains métaux, dont notamment le zinc, le plomb, le potassium, le sodium et le manganèse sont volatils: il se dégage donc des vapeurs au-dessus du bain de fonte liquide 5, qui contiennent, outre ces métaux, du monoxyde de carbone ainsi que des chlorures et des sulfates de sodium et de potassium qui sont présents dans les poudres injectées. Ces vapeurs renferment également le gaz porteur si on en utilise un lors de l'injection des poudres dans le four.

Les éléments non-volatils tels que le fer, le cuivre et le nickel se dissolvent dans la fonte liquide 5, après avoir été réduits par le carbone. Ceci entraîne une augmentation du volume du bain de fonte liquide 5.

Quant aux éléments qui ne sont ni réduits par le carbone ni volatils dans ce domaine de température tels que le chrome et le silicium, ils se retrouvent dans le laitier 6 qui surmonte le bain de fonte liquide 5.

Lorsque ces deux éléments sont présents dans la fonte, ils servent de réducteurs aux poudres et se retrouvent sous forme oxydée dans le laitier.

Périodiquement, on effectue une coulée du laitier 6 au travers du trou de coulée 13, ainsi que de la partie de fonte supplémentaire qui a été produite entre deux coulées, au travers du trou de coulée 12.

Les vapeurs qui se dégagent dans le four électrique 1, pénètrent ensuite dans le condenseur 3, à une température généralement comprise entre 1 300 et 1 000°C. Leur température décroît jusque vers 450—600°C afin d'obtenir une condensation satisfaisante et une surfusion suffisante du mélange 14 liquide ainsi obtenu pour qu'aucun problème de coulée n'existe. Selon un autre mode de réalisation, on condense ces vapeurs à une température inférieure à 400°C: on obtient ainsi des poudres métalliques. On notera que, comme dans ces deux cas, la condensation des vapeurs issues du four électrique n'est pas nécessairement réalisée avec trempe.

On récupère donc un mélange 14, liquide ou solide selon la température de condensation, qui renferme notamment le zinc et le plomb initialement présents dans les poudres injectées. Si ce mélange 14 est liquide, il est soutiré du condenseur 3 par l'intermédiaire d'un siphon 15, par exemple. Ultérieurement, le plomb et le zinc pourront être séparés du mélange 14 liquide par liquation, et être purifiés de manière classique dans une colonne de distillation. Dans le cas où le mélange 14 est solide, c'est-àdire est constitué par des particules métalliques solides, il est retiré du condenseur 3 par tout moyen convenable, puis est traité selon des méthodes connues afin d'en récupérer notamment le zinc et le plomb.

Une telle installation doit être dans son ensemble étanche de façon à éviter toute entrée d'air: s'il n'en était pas ainsi, une réoxydation du zinc gazeux ou du monoxyde de carbone aurait lieu, et en outre, cette réoxydation exothermique proviquerait une élévation de température. Ces deux inconvénients majeurs peuvent être évités si, d'un part, on maintient cette installation en surpression légère et si, d'autre part, le niveau du laitier 6 reste toujours au-dessus du niveau du trou de coulée 13 du laitier 5 afin d'éviter tout contact entre l'air extérieur et les vapeurs dégagées.

Du fait de la surpression maintenue à l'intérieur de cette installation, il est nécessaire de prévoir des soupapes de sécurité qui se déclenchent quand la pression des gaz à l'intérieur de cette installation devient supérieure à une valeur déterminée.

Du condenseur 3 s'échappent des gaz qui sont introduits dans le dispositif d'épuration 4 constitué, par exemple, d'un cyclone dépoussièreur suivi d'un laveur. Une partie du gaz sortant du laveur peut être réutilisé comme gas porteur des poudres. Le reste de ces gaz est brûle; l'énergie résultant de cette combustion peut être utilisée pour sécher les poussières avant de les mélanger avec du carbone.

Les exemples décrits ci-dessous permettront aux spécialistes en la matière de mieux comprendre la mise en oeuvre et les avantages procurés par le procédé et le dispositif de la présente invention.

Exemple I

Dans une installation telle que représentée sur la figure annexée, on injecte au moyen d'une canne d'injection 7 un mélange d'anthracite et de poussières d'aciéries, la teneur en carbone de ce mélange étant de 12%.

La composition en poids de ces poussières est la suivante:

| | | | | |
|---|---|---|---|---|
| Fe: | 24,3% | soit | $Fe_3O_4$: | 33,6% |
| Zn: | 29,1% | | ZnO: | 36,2% |
| Pb: | 3,66% | | PbO: | 3,94% |
| Mn: | 4,72% | | MnO: | 6,09% |
| Ca: | 3,58% | | CaO: | 5,01% |
| $SiO_2$: | 3,32% | | $SiO_2$: | 3,32% |
| Na: | 1,04% | | $Na_2O$: | 1,40% |
| K: | 1,04% | | $K_2O$: | 1,25% |
| Mg: | 1,55% | | MgO: | 2,06% |
| Al: | 0,32% | | $Al_2O_3$: | 0,60% |
| Ti: | 0,22% | | $TiO_2$: | 0,37% |
| Cr: | 0,56% | | $Cr_2O_3$: | 0,82% |
| Cu: | 0,12% | | CuO: | 0,15% |
| Ni: | 0,03% | | NiO: | 0,04% |
| V: | <100 ppm | | | |
| Ag: | 40 ppm | | | |
| Bi: | 95 ppm | | | |
| S: | 0,98% | | $SO_3$: | 2,45% |
| C: | 0,76% | | C: | 0,76% |
| P: | 420 ppm | | $P_2O_5$: | 0,10% |
| Cl: | 1,31% | | $Cl^-$: | 1,31% |
| $H_2O$: | 0,18% | | $H_2O$: | 0,18% |
| | | | Total: | 99,65% |

La différence entre ce total et 100 provient, d'une part, des erreurs de mesure, et, d'autre part, du fait que tous les constituants n'ont pas été dosés.

Le bain de fonte liquide 5 est maintenu à une température de l'ordre de 1 400°C.

En injectant un kilogramme d'un mélange de poussières d'aciéries et d'anthracite, on obtient de la fonte, un mélange 14 liquide renfermant du plomb et du zinc, et un laitier 6 dont les compositions respectives sont indiquées dans le tableau ci-après:

**0 007 856**

| Eléments | Fonte | Mélange liquide | Laitier |
|----------|-------|-----------------|---------|
| Zn | — | 81% | 0,1% |
| Pb | — | 10,3% | 0,05% |
| Na | — | 2,9% | — |
| K | — | 2,8% | — |
| Cl | — | 1% | — |
| S | 0,5% | 1,5% | 0,5% |
| Fe | 95% | 0,2% | FeO: 30% |
| Mn | 0,1% | 0,1 | MnO: 20% |
| C | 4% | — | — |

De ces résultats, on en déduit que l'on récupère de façon tres satisfaisante le plomb et le zinc. A partir de telles poussières d'aciéries, on récupère par tonne de mélange injecté:

— 170 kg de fonte saturée en carbone
— 180 kg de laitier
— 310 kg de mélange liquide contenant le plomb et le zinc.

Quant à l'énergie électrique nécessaire à la mise en oeuvre de ce procédé, elle a été de 1,7 kWh par kg de mélange injecté.

On note que la présence de sodium et de potassium dans le mélange 14 liquide permet d'éliminer certaines impuretés telles que le fer et l'arsenic, par formation, lors du refroidissement, de composés intermétalliques comme par exemple zinc-fer-sodium ou zinc-arsenic-sodium.

Exemple II

Avant le séchage des poussières d'aciéries qui ont la même composition qu'à l'exemple précédent, il peut être intèressant de laver celles-ci afin d'en éliminer les halogènes, les sulfates et une partie des métaux alcalins qu'elles contiennent. En ce que concerne ces derniers, il est ainsi possible d'en éliminer jusqu'à 75% grâce à ce lavage.

Le mélange 14 liquide qui est ensuite recueilli, présente la composition suivant:

| | |
|---|---|
| Zn: | 86,2% |
| Pb: | 11% |
| Na: | 0,7% |
| K: | 0,7% |

Exemple III

Les blendes utilisées dans les différents fabrication du zinc cont généralement sous forme de concentrès de flottation de granulométrie assez fine.

En général, leur analyse est la suivante:

| | |
|---|---|
| Zn: | 45 à 50% |
| S: | 30% |
| Fe: | 10% |
| Pb: | 2% |

Le premier stade de la métallurgie du zinc est un grillage qui permet d'obtenir un produit oxydé. Parmi les différents procédés de grillage, on peut utiliser un grillage en lit fluidisé. Il nous permet d'obtenir un produit oxydé de fine granulométrie et d'analyse suivante:

6

| | |
|---|---|
| Zn: | 50 à 55% |
| S: | 0,2% |
| Fe: | 14% |
| Pb: | 2% |

Ce produit oxydé est bien adapté à notre procédé (granulométrie et composition).

On peut l'injecter encore chaud dans la fonte liquide, ce qui permettra de diminuer l'energie électrique nécessaire au traitement.

A partir c'un tel produit, on peut alors obtenir par tonne de concentré grillé:

— 100 kg de fonte;
— 100 kg de laitier;
— 500 kg d'un alliage plomb/zinc à 4 ou 5% de plomb.

Bien que ces exemples concernent surtout la récupération du plomb, du zinc et du fer contenus dans les poussières d'aciéries, le procédé selon l'invention peur également être utilisé pour récupérer ces mêmes métaux, par exemple, à partir de poussières de hauts-forneaux ou de galvanisation, ou à partir de minerais oxydés.

On peut, par exemple, coupler cette installation avec un four de grillage en lit fluidisé, ce qui permet alors de taiter des concentrés sulfurés comme à l'exemple 3.

Quoique tout produit oxydé puisse être traité selon la présente invention, il est préférable qu'il y ait une quantité de fer suffisante pour que la composition du bain métallique soit aussi proche que possible de celle de la fonte. Par exemple, lorsque les poudres contiennent des métaux tels que le nickel, le cobalt ou le chrome, il est souhaitable que la quantité de fer soit suffisante pour que la quantité de ces différents éléments dans la fonte finale soit intérieure à 5% et de préférence à 2% en poids.

D'une manière générale, le procédé convient particulièrement bien pour les produits contenant plus de 5% de fer et moins de 60% de zinc.

En effet, pour les produits dont la teneur serait supérieure à 60% de zinc, d'autres procédés seraient probablement plus économiques, compte tenu de la forte valeur marchande de tels composés.

## Revendications

1. Procédé de récupération du plomb et du zinc contenus dans des produits oxydés plombifères et zincifères, caractérisé par le fait que l'on injecte dans un bain de fonte lesdits produits après séchage ainsi qu'une quantité de carbone soluble égale à la somme, d'une part des quantitiés stoechiométriques nécessaires pour réduire l'oxyde de zinc et les oxydes de métaux moins réducteurs que le zinc à la température du bain de fonte et, d'autre part de la quantité nécessaire pour transformer en fonte 40 à 80% des oxydes de fer, par le fait que lesdits produits sont après broyage éventuel; à maille comprise entre 0 et 4 millimètres, par le fait quel'on injecte lesdits produits dans ledit bain de fonte en utilisant un gaz porteur non-oxydant vis-à-vis de la vapeur de zinc et par le fait que l'on condense les vapeurs qui se dégagent du bain de fonte.

2. Procédé selon la revendication 1 caractérisé par le fiat que lesdits produits sont préalablement broyés à une maille comprise entre 0 et 1 millimètre.

3. Procédé selon la revendication 1, caractérisé par le fait que lesdits produits sont choisis dans le groupe constitué par les poussières d'aciéres, les poussières de haut-fourneaux et de leur mélange.

4. Procédé selon les revendications 1 à 3 prises séparément, caractérisé par le fait que la température dudit bain de fonte est comprise entre 1 100 et 1 600°C.

5. Procédé selon la revendication 4, caractérisé par le fait que ladite température est comprise entre 1 250 et 1 500°C.

6. Procédé selon les revendications 1 à 5 prises séparément, caractérisé par le fait que ledit bain de fonte est contenu dans un four étanche à électrodes submergées.

7. Procédé selon les revendications 1 à 6 prises séparément, caractérisé par le fait que ledit bain de fonte est saturé en carbone.

8. Procédé selon les revendications 1 à 7 prises séparément, caractérisé pa le fait que l'on condense lesdits gaz qui se sont dégagés du bain de fonte, à une température inférieure à 900°C.

9. Procédé selon la revendication 8, caractérisé par le fait que ladite température de condensation est inférieure à 400°C.

10. Procédé selon les revendications 1 à 9 prises séparément, caractérisé par le fait que l'on épure les gaz issus de l'étape de condensation.

11. Procédé selon la revendication 10, caractérisé par le fait que l'on dépoussière lesdits gaz avant de les laver puis de les brûler.

**0 007 856**

12. Procédé selon les revendications 1 à 11 prises séparément, caractérisé par le fait que l'énergie pour sécher lesdits produits avant leur injection à la surface du bain de fonte est fournie, au moins partiellement, par la combustion d'au moins une partie desdits gaz non condensés.

13. Procédé selon la revendication 12, caractérisé par le fait que ledit gaz porteur est choisi dans le groupe comprenant l'azote, l'argon et les gaz épurés.

14. Procédé selon les revendication 1 à 13 prises séparément, caractérisé par le fait que lesdits produits oxydés plombifères et zincifères sont injectés à l'aide d'un moyen choisi dans le groupe constitué par les cannes d'injection, les tuyères d'injection et les électrodes creuses.

**Patentansprüche**

1. Verfahren zur Rückgewinnung von Blei und Zink, die in oxydischen bleihaltigen und zinkhaltigen Substanzen enthalten sind, dadurch gekennzeichnet, daß man diese Substanzen nach dem Trocknen in ein Schmelzbad injiziert, gemeinsam mit einer Menge an löslichem Kohlenstoff, die gleich ist der Summe von einerseits den stöchiometrischen Mengen, die notwendig sind um das Zinkoxid und die Oxide der bei der Temperatur des Schmelzbades weniger stark als das Zink reduzierenden Metalle zu reduzieren, und von andererseits der Menge, die notwendig ist, um 40 bis 80% der Eisenoxide in Schmelze überzuführen; sowie dadurch, daß diese Substanzen Nach einer eventuellen Zerkleinerung eine Siebgröße von 0 bis 4 mm aufweisen; dadurch, daß diese Substanzen in das Schmelzbad mit Hilfe eines gegenüber Zinkdampf nichtoxidierenden Trägergases injiziert werden; und dadurch daß die aus dem Schmelzbad entweichenden Dämpfe kondensiert werden.

2. Verfahren nach Anspruch 1, dadurch gekennzeichnet, daß die Substanzen vorher aus eine Siebgröße von 0 bis 1 mm zerkleinert werden.

3. Verfahren nach Anspruch 1, dadurch gekennzeichnet, daß die Substanzen aus der Gruppe Stahlwerksstäube, Hochofenstäube und ihre Mischung ausgewählt werden.

4. Verfahren nach einem der Ansprüche 1 bis 3, dadurch gekennzeichnet, daß die Temperatur des Schmelzbads zwiwchen 1100 und 1600°C liegt.

5. Verfahren nach Anspruch 4, dadurch gekennzeichnet, daß diese Temperatur zwischen 1250 und 1500°C liegt.

6. Verfahren nach einem der Ansprüche 1 bis 5, dadurch gekennzeichnet, daß sich das Schmelzbad in einem abgeschlossenen Ofen mit Tauchelektroden befindet.

7. Verfahren nach einem der Ansprüche 1 bis 6, dadurch gekennzeichnet, daß das Schmelzbad mit Kohlenstoff gesättigt ist.

8. Verfahren nach einem der Ansprüche 1 bis 7, dadurch gekennzeichnet, daß die Gase, die aus dem Schmelzbad entweichen, bei einer Temperatur von unter 900°C kondensiert werden.

9. Verfahren nach Anspruch 8, dadurch gekennzeichnet, daß diese Kondensationstemperatur unter 400°C liegt.

10. Verfahren nach einem der Ansprüche 1 bis 9, dadurch gekennzeichnet, daß die aus dem Kondensationsschritt stammenden Gase gereinigt werden.

11. Verfahren nach Anspruch 10, dadurch gekennzeichnet, daß diese Gase entstaubt, dann gewaschen und hierauf verbrannt werden.

12. Verfahren nach einem der Ansprüche 1 bis 11, dadurch gekennzeichnet, daß die Energie für die Trocknung der Substanzen vor ihrer Injektion auf die Oberfläche des Schmelzbades zum indesten teilweise aus der Verbrennung mindestens eines Teils dieser nicht kondensierten Gase stammt.

13. Verfahren nach Anspruch 12, dadurch gekennzeichnet, daß das Trägergas aus der Gruppe Stickstoff, Argon und die gereinigten Gase ausgewählt wird.

14. Verfahren nach einem der Ansprüche 1 bis 13, dadurch gekennzeichnet, daß die oxydischen bleihältigen und zinkhältigen Substanzen mit Hilfe eines Mittels injiziert werden, das aus der Gruppe Injektionsrohre, Injektionsdüsen und Hohlelektroden ausgewählt wird.

**Claims**

1. Recovery process for the lead and zinc contained in lead-containing and zinc-containing oxidized products, characterised by the fact that the said products are injected after drying into a hot metal bath together with a quantity of soluble carbon equal to the sum of, on the one hand, the stoichiometric quantites required to reduce the zinc oxide and the oxides of metals less reducible than zinc to the temperature of the hot metal bath and, on the other hand, the quantity required to transform into reduced metal 40 to 80% of the iron oxides, by the fact that the said products, possibly after crushing, have a mesh size of between 0 and 4 millimetres, by the fact that the said products are injected into the said hot metal bath using a carrier gas which is non-oxidizing in relation to zinc vapour and by the fact that the vapours released from the hot metal bath are condensed.

2. Process according to claim 1, characterised by the fact that the said products are previously crushed to a mesh size of between 0 and 1 millimetre.

3. Process according to claim 1, characterised by the fact that the said products are selected from the group consisting of steel mill dusts, blast furnace dusts and mixtures thereof.

8

4. Process according to claims 1 to 3 taken separately, characterised by the fact that the temperature of the said hot metal bath is between 1100 and 1600°C.

5. Process according to claim 4, characterised by the fact that the said temperature is between 1250 and 1500°C.

6. Process according to claims 1 to 5 taken separately, characterised by the fact that the said hot metal bath is contained in a tight, submerged-electrode furnace.

7. Process according to claims 1 to 6 taken separately, characterised by the fact that the said hot metal bath is carbon-saturated.

8. Process according to claims 1 to 7 taken separately, characterised by the fact that the said gases which have been emitted by the not metal bath are condensed at a temperature below 900°C.

9. Process according to claim 8, characterised by the fact that the said condensation temperature is below 400°C.

10. Process according to claims 1 to 9 taken separately, characterised by the fact that the gases from the condensation stage are purified.

11. Process according to claim 10, characterised by the fact that the said gases are de-dusted before washing and then burning them.

12. Process according to claims 1 to 11 taken separately, characterised by the fact that the energy for drying the said products before injecting them onto the surface of the hot metal bath is supplied, at least partly, by burning at least part of the said non-condensed gases.

13. Process according to claim 12, characterised by the fact that the said carrier gas is selected from the group including nitrogen, argon and the purified gases.

14. Process according to claims 1 to 13 taken separately, characterised by the fact that the said lead-containing and zinc-containing oxidized products are injected by a means selected from the group consisting of injection rods, injection nozzles and hollow electrodes.